# EUROPEAN PATENT APPLICATION

(11) **EP 4 793 210 A1**
(43) Date of publication of application: **19.08.2026**
(21) Application number: 24926495.3
(22) Date of filing: 06.03.2024
(51) Int. Cl.: B65G 47/90, B65G 35/00

(54) **BATTERY CONVEYING SYSTEM, BATTERY CONVEYING METHOD, AND BATTERY PRODUCTION LINE**

(30) Priority: 26.02.2024 CN 202410209200
(71) Applicant: Contemporary Amperex Technology Co., Limited, Ningde, Fujian 352100 (CN)
(72) Inventor: XU, Yanjun, Ningde, Fujian 352100 (CN); MA, Yuhang, Ningde, Fujian 352100 (CN); CHEN, Wentao, Ningde, Fujian 352100 (CN)
(74) Representative: Ziebig Hengelhaupt Intellectual Property Attorneys Patentanwaltskanzlei PartGmbB
(86) International application number: PCT/CN2024/080313
(87) International publication number: WO 2025/179620

(57) **Abstract**

A battery conveying system, a battery conveying method, and a battery production line are disclosed. The battery conveying system includes: a transfer table including at least two carrying platforms for carrying batteries, where the at least two carrying platforms each are capable of independently performing reciprocating motion along a first direction; a first pick-and-place device configured to pick batteries and place the batteries on at least any one of the carrying platforms; a second pick-and-place device configured to pick batteries carried on the carrying platforms and place the batteries at a prescribed position; and push plates, where the push plate is provided on each of the carrying platforms and is capable of advancing or retreating along the first direction, and a pushing operation is performed by the advancing action; where the first pick-and-place device and the second pick-and-place device are located on opposite sides of the transfer table along the first direction.

## Description

### CROSS-REFERENCE TO RELATED APPLICATIONS

The present disclosure is proposed based on the Chinese patent application with application No. 202410209200.1, filed on February 26, 2024, and entitled "BATTERY CONVEYING SYSTEM, BATTERY CONVEYING METHOD, AND BATTERY PRODUCTION LINE", and claims priority to this Chinese patent application. This Chinese Patent Application is incorporated herein by reference in its entirety.

### TECHNICAL FIELD

The present disclosure relates to the field of battery manufacturing technologies, and in particular, to a battery conveying system, a battery conveying method, and a battery production line.

### BACKGROUND

New energy batteries are increasingly widely used in daily life and industry. For example, new energy vehicles equipped with batteries have been widely used, and batteries are also increasingly applied in fields such as energy storage.

In the production and manufacturing process of batteries, a battery conveying system is usually required to convey the batteries, so that the batteries can flow between various stations or conveying lines. In the development of battery manufacturing technologies, in addition to improving the performance of batteries, improving production efficiency is also one of the goals continuously pursued by the industry, and the conveying efficiency of batteries has a significant impact on production efficiency and the like. Therefore, how to improve the conveying efficiency of batteries is one of the research topics in the industry.

### SUMMARY

In order to solve the above technical problems, the present disclosure provides a battery conveying system, a battery conveying method, and a battery production line with high conveying efficiency and capable of improving the production line takt.

The present disclosure is achieved through the following technical solutions.

A first aspect of the present disclosure provides a battery conveying system. The battery conveying system includes: a transfer table including at least two carrying platforms for carrying batteries, where the at least two carrying platforms each are capable of independently performing reciprocating motion along a first direction; a first pick-and-place device configured to pick batteries and place the batteries on at least any one of the carrying platforms; a second pick-and-place device configured to pick batteries carried on the carrying platforms and place the batteries at a prescribed position; and push plates configured to perform a pushing operation on the batteries, where the push plates are provided on the carrying platforms and are capable of advancing or retreating along the first direction, and the pushing operation is performed by the advancing action of the push plates; where the first pick-and-place device and the second pick-and-place device are located on opposite sides of the transfer table along the first direction.

Since the transfer table includes at least two carrying platforms, and each carrying platform can independently perform reciprocating motion along the first direction, when one of the carrying platforms is loaded by the first pick-and-place device and then moved to the vicinity of the second pick-and-place device for loading, the first pick-and-place device can continue to pick batteries and place them on another carrying platform, and the another carrying platform is similarly moved to the vicinity of the second pick-and-place device after loading is completed to wait for loading. In this way, after the second pick-and-place device picks the batteries on one of the carrying platforms, it can continuously pick the batteries on the another carrying platform without interruption, achieving uninterrupted loading of batteries, while the empty carrying platform after loading is completed will again move along the first direction to the vicinity of the first pick-and-place device, and the first pick-and-place device continues to perform loading, and so on. This can effectively improve the production line takt, reduce waiting time, accelerate conveying efficiency, increase production capacity, thereby improving production efficiency and reducing production costs.

In addition, the push plates can perform a pushing operation on the batteries placed on the carrying platforms by the first pick-and-place device, so that the batteries can be closely arranged along the first direction and can be pushed to a position to be picked, facilitating subsequent picking by the second pick-and-place device. As a result, the first pick-and-place device and the second pick-and-place device can easily pick and place batteries even when moving within a smaller range. Moreover, since the push plates perform the pushing operation through the advancing action, the pushing operation can be easily achieved even if different numbers of batteries are carried on the carrying platforms.

In some embodiments, the transfer table includes: a base bracket, where the carrying platforms are provided on the base bracket; and at least two guide rails, where the guide rails each are provided on the base bracket and extend along the first direction, and the carrying platforms are respectively supported on the guide rails and are capable of moving along the guide rails.

As a result, the carrying platforms can achieve reciprocating motion along the first direction through cooperation with the guide rails, with a simple structure. In addition, providing the guide rails can reduce friction and shaking when the carrying platforms move along the first direction, thereby making the movement of the carrying platforms smoother and more stable, with higher reliability and lower energy consumption, which is more conducive to energy saving and environmental protection. In addition, by driving the carrying platforms to perform reciprocating motion along the guide rails, the size of the transfer table can be easily designed as needed, thereby appropriately connecting the first pick-and-place device and the second pick-and-place device on both sides of the transfer table, so that the first pick-and-place device and the second pick-and-place device can easily pick and place batteries even when moving within a small range.

In some embodiments, stop members are provided on opposite sides of the base bracket along the first direction, and the stop members are configured to stop the carrying platforms.

As a result, when the carrying platforms perform reciprocating motion along the first direction, the stop members can limit the carrying platforms to prevent the carrying platforms from falling off the guide rails, and improve the reliability of the movement of the carrying platforms along the first direction.

In some embodiments, the transfer table includes reference plates provided on the carrying platforms and on opposite side of the push plates along the first direction, where the reference plate is configured to stop the batteries.

Since a reference plate is further provided, the final pushed-in-place position of the batteries can be defined to prevent the batteries from falling off the carrying platforms during the pushing operations of the push plates.

In some embodiments, the push plate is capable of performing reciprocating motion along the first direction under the drive of a push driving device, where the push driving device is located below a carrying surface of the carrying platform; the carrying platform is formed with an avoidance opening extending along the first direction, the push plate passes through the avoidance opening to connect to a push plate connecting member, and the push plate connecting member is connected to the push driving device.

As a result, the push plates are capable of moving along the first direction in an automated manner under the drive of the push driving devices, thereby easily achieving the pushing operations, with a simple structure and simple motion control. In addition, since the push driving devices are provided below the carrying surfaces of the carrying platforms, they will not interfere with the batteries placed on the carrying platforms, and also reserves a larger space above the carrying platforms, facilitating placement and picking of the batteries.

In some embodiments, the transfer table includes lifting devices, where the lifting device is connected to the push plate connecting member and is provided between the push plate and the push plate connecting member, and the push plates are capable of performing reciprocating motion along a third direction under the drive of the lifting devices; where the third direction is perpendicular to the first direction.

As a result, the push plates can adjust the height of the push plates along the third direction under the drive of the lifting devices, thereby enabling good pushing operations for batteries of different height dimensions, with better compatibility and conducive to flexible production.

In some embodiments, the transfer table includes push detection sensors, where the push detection sensor is provided on the push plate and is configured to detect whether the batteries are pushed in place.

As a result, it is possible to detect whether the batteries are pushed in place, and after the batteries are pushed in place, the push plates can be retracted or maintained in the current position, facilitating picking by the second pick-and-place device. In addition, the possibility of damage to the batteries due to excessive pushing by the push plates can be reduced, improving the reliability of the pushing operation by the push plates.

In some embodiments, the transfer table includes pressing members configured to press the batteries along a third direction, where the pressing member is provided on the carrying platform and is capable of performing reciprocating motion along the third direction under the drive of a pressing driving device.

As a result, the pressing members can press the batteries on the carrying platforms along the third direction, so that the second pick-and-place device can only pick the batteries that are not pressed, reducing the possibility of accidentally picking extra batteries during the picking process of the second pick-and-place device, improving the reliability of picking by the second pick-and-place device, and also achieving the conversion of batteries from a full row to a prescribed number for picking.

In some embodiments, the pressing member is provided on the transfer table via a moving carriage, and the moving carriage is capable of performing reciprocating motion along the first direction on the transfer table under the drive of a moving driving device.

As a result, the pressing member is capable of moving along the first direction in an automated manner with a simple and stable structure. Moreover, since the pressing member is capable of moving along the first direction, batteries at different positions can be pressed by adjusting the position of the pressing member along the first direction, so that the second pick-and-place device can accurately pick a prescribed number of batteries.

In some embodiments, the transfer table includes alignment assemblies provided on the carrying platforms and configured to perform alignment operations on the batteries; where the alignment assembly includes two alignment members, the two alignment members extend along the first direction and are capable of approaching or moving away from each other along a second direction, and the alignment operations are performed through the approaching actions of the two alignment members; where the second direction is perpendicular to both the first direction and the third direction.

Since the transfer table includes alignment assemblies, and the two alignment members of the alignment assemblies can perform alignment operations through actions of approaching each other along the second direction, multiple batteries on the carrying platforms can be aligned and centered with a simple structure and simple actions to form a neat battery queue, which is more conducive to picking by the second pick-and-place device. Moreover, since the two alignment members extend along the first direction, multiple batteries can be aligned at the same time, with higher alignment efficiency. In addition, since the transfer table achieves alignment and centering through the mutual approach of the two alignment members, batteries of different size specifications can be adapted to by adjusting the distance when the two alignment members approach each other, with good compatibility, which is conducive to flexible production.

In some embodiments, the two alignment members are connected to a lead screw, the lead screw extends along the second direction and is rotatably provided below the carrying platforms, and the two alignment members are capable of approaching or moving away from each other along the lead screw with the rotation of the lead screw.

As a result, the mutual approaching motion of the two alignment members can be achieved simply through the rotation of the lead screw, thereby easily achieving reliable alignment of batteries with a simple structure and in an automated manner without additional alignment references. Moreover, locating the lead screw below the carrying platforms can also provide a larger operating space for the carrying platforms, which is more conducive to alignment operations on the batteries, and the lead screw transmission can also make the two alignment members approach or move away from each other in a continuous motion manner, with smoother and more stable motion. In addition, the lead screw transmission has transmission efficiency and low energy consumption, which is more conducive to energy saving and environmental protection.

In some embodiments, the alignment assemblies include at least two first alignment connecting members, where one end of each of the two first alignment connecting members is connected to each of the two alignment members, and the other end is connected to each of two second alignment connecting members; the two second alignment connecting members are both supported on the lead screw and are capable of performing reciprocating motion along the second direction with the rotation of the lead screw.

As a result, the actions of the two alignment members approaching or moving away from each other can be achieved with only one lead screw, which is beneficial to reducing the number of parts and lowering assembly difficulty. Moreover, the actions of the two alignment members approaching or moving away from each other can be more synchronized, thereby better centering and aligning the batteries.

In some embodiments, the transfer table further includes a synchronous belt assembly; where the synchronous belt assembly includes two synchronous pulleys and a synchronous belt drivingly connected to the two synchronous pulleys, where one of the synchronous pulleys is connected to an output end of an alignment driving device, and the other synchronous pulley is connected to the lead screw; the synchronous belt assembly is capable of rotating under the drive of the alignment driving device, thereby driving the lead screw to rotate.

As a result, the transmission structure using the synchronous belt and synchronous pulleys can make the alignment assemblies approach or move away from both sides in the second direction simultaneously for centering, thereby achieving alignment of batteries, with higher motion accuracy and more stable motion process, while also reducing the risk of excessive force during alignment.

A second aspect of the present disclosure provides a battery conveying method using a battery conveying system to convey batteries, where the battery conveying system includes a transfer table, a first pick-and-place device, and a second pick-and-place device; the transfer table includes at least a first carrying platform and a second carrying platform, the first carrying platform and the second carrying platform each are capable of independently performing reciprocating motion along a first direction; push plates are provided on the first carrying platform and the second carrying platform respectively, and the push plates are capable of advancing or retreating along the first direction; and the battery conveying method includes: moving the first carrying platform along the first direction to the vicinity of the first pick-and-place device, where the first pick-and-place device picks the batteries from a predetermined position and places the batteries on the first carrying platform; moving the first carrying platform carrying the batteries along the first direction to the vicinity of the second pick-and-place device, and moving the second carrying platform along the first direction to the vicinity of the first pick-and-place device; picking, by the second pick-and-place device, the batteries placed on the first carrying platform after the pushing operation by the push plates and placing the batteries at a prescribed position, and picking, by the first pick-and-place device the batteries from the predetermined position and placing the batteries on the second carrying platform; and moving the second carrying platform along the first direction to the vicinity of the second pick-and-place device, where after the second pick-and-place device completes picking and placing all the batteries carried on the first carrying platform, it continues to pick and place the batteries carried on the second carrying platform after the pushing operation by the push plates, and the first carrying platform moves again along the first direction to the vicinity of the first pick-and-place device.

As a result, loading of batteries and uninterrupted loading can be achieved through the alternating movement of the first carrying platform and the second carrying platform between the first pick-and-place device and the second pick-and-place device, thereby effectively improving the production line takt, reducing waiting time, and improving conveying efficiency.

In some embodiments, the transfer table includes reference plates and pressing members provided on the first carrying platform and the second carrying platform; the pressing members being capable of moving along the first direction and being capable of moving along a third direction; and the first direction being perpendicular to the third direction; and before the step of the second pick-and-place device picking the batteries carried on the first carrying platform or the second carrying platform, the battery conveying method includes: advancing the push plate on the carrying platform where the batteries to be picked are located along the first direction to perform a pushing operation on the batteries until all the batteries are closely fitted between a pushing surface of the push plate and an abutting surface of the reference plate; and moving the pressing member on the carrying platform where the batteries to be picked are located along the first direction to a preparatory pressing position, and moving from the preparatory pressing position along the third direction until the pressing member is in contact with the batteries adjacent to the batteries to be picked.

As a result, the batteries can be closely arranged along the first direction through the pushing operation of the push plates, and the batteries can be pushed to the position to be picked, facilitating picking by the second pick-and-place device. Moreover, the contact of the pressing member with the batteries adjacent to the batteries to be picked reduces the possibility of the second pick-and-place device picking extra batteries, thereby improving the reliability of picking by the second pick-and-place device.

In some embodiments, the step of picking, by the second pick-and-place device, the batteries carried on the first carrying platform or the second carrying platform includes: picking, by the second pick-and-place device, the batteries located on a side of the reference plate on the first carrying platform or the second carrying platform and not pressed by the pressing member, and placing the batteries at the prescribed position; moving the pressing member away from the batteries along the third direction; advancing the push plate along the first direction to perform a pushing operation on the batteries until all the batteries are closely fitted between the pushing surface and the abutting surface; moving the pressing member along the third direction until the pressing member is in contact with the batteries adjacent to the batteries to be picked; and repeating the above steps until the second pick-and-place device completes picking and placing all the batteries carried on the first carrying platform or the second carrying platform.

After the second pick-and-place device completes one picking operation, the pressing member releases the pressing, and the push plates perform the pushing operation again to push the subsequent batteries to the position to be picked, facilitating the second pick-and-place device to continue the next picking operation. As a result, the conversion of batteries from a full row to a prescribed number for picking can be achieved in an automated manner through simple actions.

In some embodiments, the transfer table includes alignment assemblies provided on the first carrying platform and the second carrying platform; the alignment assembly includes two alignment members, the two alignment members are capable of approaching or moving away from each other along a second direction, and the second direction is perpendicular to both the first direction and the third direction; and before the step of picking, by the second pick-and-place device, the batteries carried on the first carrying platform or the second carrying platform, the battery conveying method further includes: causing the two alignment members to perform actions of approaching each other along the second direction until the alignment surfaces of the alignment members are in contact with the batteries to align the batteries; and causing the two alignment members to move away from each other along the second direction.

As a result, a neatly aligned battery queue can be easily formed through the approaching actions of the two alignment members, which is more conducive to picking by the second pick-and-place device while reducing the possibility of missed picking or incorrect picking due to disordered arrangement of the batteries.

A third aspect of the present disclosure provides a battery production line, where the battery production line includes: a loading table, the battery conveying system according to the first aspect of the present disclosure, and a battery conveying line; where the first pick-and-place device is configured to pick the batteries at the loading table and place the batteries on the transfer table; and the second pick-and-place device is configured to pick the batteries carried on the transfer table and place the batteries on the battery conveying line.

As a result, conveying of batteries can be achieved in an automated manner, and through the mutual cooperation in action timings of at least two carrying platforms of the transfer table, the production takt is improved, thereby improving conveying efficiency and increasing production capacity.

### Effects of the invention

Through the present disclosure, a battery conveying system, a battery conveying method, and a battery production line with high conveying efficiency and capable of improving the production line takt are provided.

### BRIEF DESCRIPTION OF DRAWINGS

Various other advantages and benefits will become apparent to those of ordinary skill in the art by reading the detailed description of the preferred embodiments below. The accompanying drawings are only for the purpose of illustrating the preferred embodiments and are not considered as limiting the present disclosure. Moreover, throughout all the drawings, the same reference signs denote the same parts. In the drawings:
FIG. 1 is a schematic plan view of a structure of a battery conveying system according to some embodiments of the present disclosure;
FIG. 2 is a schematic perspective view of a structure of a transfer table according to some embodiments of the present disclosure;
FIG. 3 is a schematic axonometric view of a transfer table according to some embodiments of the present disclosure;
FIG. 4 is a schematic partial enlarged view of a structure of a transfer table according to some embodiments of the present disclosure;
FIG. 5 is a schematic flowchart of a battery conveying method according to some embodiments of the present disclosure;
FIG. 6 is another schematic flowchart of a battery conveying method according to some embodiments of the present disclosure;
FIG. 7 is yet another schematic flowchart of a battery conveying method according to some embodiments of the present disclosure; and
FIG. 8 is still another schematic flowchart of a battery conveying method according to some embodiments of the present disclosure.

Description of reference signs:
1-transfer table; 11-base bracket; 12-guide rail; 13-stop member; 2-carrying platform; 21-carrying surface; 22-carrying frame body; 23-sliding member; 24-avoidance opening; 3-push plate; 31-push driving device; 32-push plate connecting member; 33-push plate bracket; 34-elastic member; 35-lifting device; 36-push detection sensor; 4-reference plate; 5-pressing member; 51-pressing driving device; 52-pressing bracket; 53-moving carriage; 54-moving driving device; 55-pressing detection sensor; 6-alignment assembly; 61-alignment member; 62-first alignment connecting member; 63-second alignment connecting member; 7-lead screw; 71-engagement member; 8-synchronous belt assembly; 81-synchronous pulley; 82-synchronous belt; 83-cover body; 9-alignment driving device; 10-first pick-and-place device; 20-second pick-and-place device; 30-battery; and 100-battery conveying system.

### DESCRIPTION OF EMBODIMENTS

Embodiments of the technical solutions of the present disclosure will be described in detail below with reference to the accompanying drawings. The following embodiments are only used to more clearly illustrate the technical solutions of the present disclosure, and therefore are only examples and cannot be used to limit the protection scope of the present disclosure.

Unless otherwise defined, all technical and scientific terms used herein have the same meaning as commonly understood by those skilled in the technical field to which the present disclosure belongs; the terms used herein are only for the purpose of describing specific embodiments and are not intended to limit the present disclosure; and the terms "including" and "having" in the present disclosure and any variations thereof are intended to cover non-exclusive inclusion.

In the description of the embodiments of the present disclosure, the technical terms "first", "second", "third", and the like are only used to distinguish different objects and cannot be understood as indicating or implying relative importance or implicitly indicating the number, specific order, or primary-secondary relationship of the indicated technical features. In the description of the embodiments of the present disclosure, "multiple" means two or more, unless otherwise explicitly and specifically defined.

Reference herein to "embodiment" means that a specific feature, structure, or characteristic described in connection with the embodiment may be included in at least one embodiment of the present disclosure. The appearance of the phrase in various places in the specification does not necessarily refer to the same embodiment, nor is it an independent or alternative embodiment mutually exclusive with other embodiments. Those skilled in the art explicitly and implicitly understand that the embodiments described herein can be combined with other embodiments.

In the description of the embodiments of the present disclosure, the term "and/or" is merely a description of the association relationship of associated objects, indicating that three relationships can exist, for example, A and/or B can indicate: A exists alone, A and B exist simultaneously, and B exists alone. In addition, the character "/" herein generally indicates that the associated objects before and after are in an "or" relationship.

In the description of the embodiments of the present disclosure, the technical terms "length", "width", "thickness", "upper", "lower", "front", "rear", "left", "right", "vertical", "horizontal", "top", "bottom", "inner", "outer", "circumferential", and the like indicating orientation or positional relationships are based on the orientation or positional relationships shown in the drawings, and are only for the convenience of describing the embodiments of the present disclosure and simplifying the description, rather than indicating or implying that the referred device or element must have a specific orientation, be constructed and operated in a specific orientation, and therefore cannot be understood as limiting the embodiments of the present disclosure.

In the description of the embodiments of the present disclosure, unless otherwise explicitly specified and defined, the technical terms "installation", "connection", "connecting", "fixing", and the like should be understood in a broad sense, for example, it can be fixed connection, detachable connection, or integrated; it can be mechanical connection or electrical connection; it can be directly connected or indirectly connected through an intermediate medium, it can be the internal communication of two elements or the interaction relationship between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be direct contact, may be contact with an intermediate medium layer in between, may be contact between two contacting objects with basically no mutual interaction force, or may be contact between two contacting objects with mutual interaction force.

Below, the present disclosure is described in detail.

At present, new energy batteries are increasingly widely used in daily life and industry. New energy batteries are not only applied to energy storage power systems such as hydropower, thermal power, wind power, and solar power stations, but also widely used in electric transportation tools such as electric bicycles, electric motorcycles, and electric automobiles, as well as multiple fields such as aerospace. With the continuous expansion of the application fields of power batteries, their market demand is also continuously increasing.

In the production and manufacturing process of batteries, it is necessary to connect various conveying lines or stations through a battery conveying system to convey the batteries, so that the batteries can flow between the various conveying lines and stations for different processing operations. For example, in the process of producing battery modules or battery packs, it is usually necessary to take out battery cells from a large battery package containing many battery cells and load them onto a conveying line. The takt of battery cell loading and conveying affects the production takt of subsequent processes. Therefore, the conveying efficiency of the battery conveying system greatly affects the production and manufacturing efficiency of batteries. In turn, improving the conveying efficiency of the battery conveying system helps to improve the production takt of the battery production line, can effectively improve the production efficiency of the battery production line, and helps to reduce production costs.

Existing battery conveying systems usually use truss grippers to connect conveying lines and stations, where the truss grippers need to reciprocate to pick and convey batteries, resulting in a slow conveying takt and low conveying efficiency.

The present disclosure proposes a battery conveying system in view of the problems existing in the above related art. The battery conveying system includes a transfer table, a first pick-and-place device, a second pick-and-place device, and push plates. The transfer table includes at least two carrying platforms for carrying batteries, and the at least two carrying platforms each are capable of independently performing reciprocating motion along a first direction. The first pick-and-place device is configured to pick batteries and place the batteries on at least any one of the carrying platforms. The second pick-and-place device is configured to pick the batteries carried on the carrying platforms and place the batteries at a prescribed position. The push plate is configured to perform pushing operation on the batteries, the push plate is provided on each of the carrying platforms and is capable of advancing or retreating along the first direction, and the pushing operation is performed by the advancing action of the push plate. The first pick-and-place device and the second pick-and-place device are located on opposite sides of the transfer table along the first direction.

The battery conveying system of the embodiments of the present disclosure can simultaneously perform loading and loading of batteries with a simple structure and simple actions, and can also realize uninterrupted loading of batteries, thereby effectively improving the production line takt, reducing waiting time, accelerating battery conveying efficiency, increasing production capacity, thereby improving production efficiency and reducing production costs.

The battery conveying system of the embodiments of the present disclosure can be used in the production process of batteries, for example, for conveying in the process of loading batteries. Certainly, those skilled in the art should understand that the battery conveying system according to the embodiments of the present disclosure is not only used for conveying various batteries in the battery production and manufacturing process, but can also be used for conveying other workpieces that need to be conveyed in other production lines.

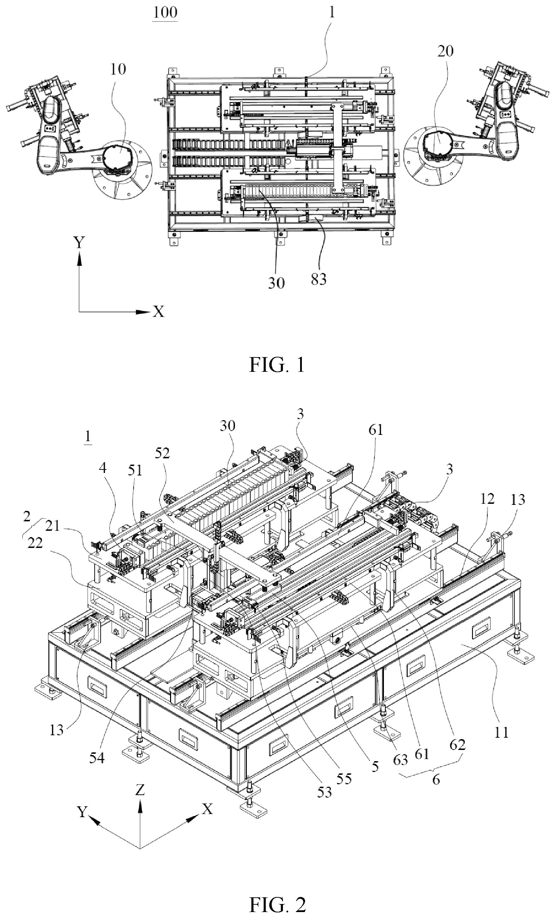

Below, some embodiments of the present disclosure are described in detail with reference to FIGs. 1 to 8.

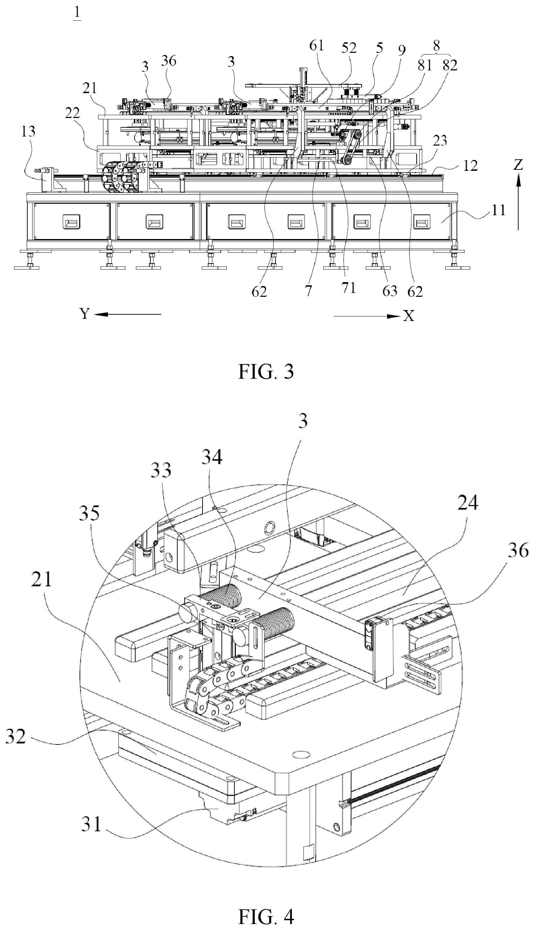

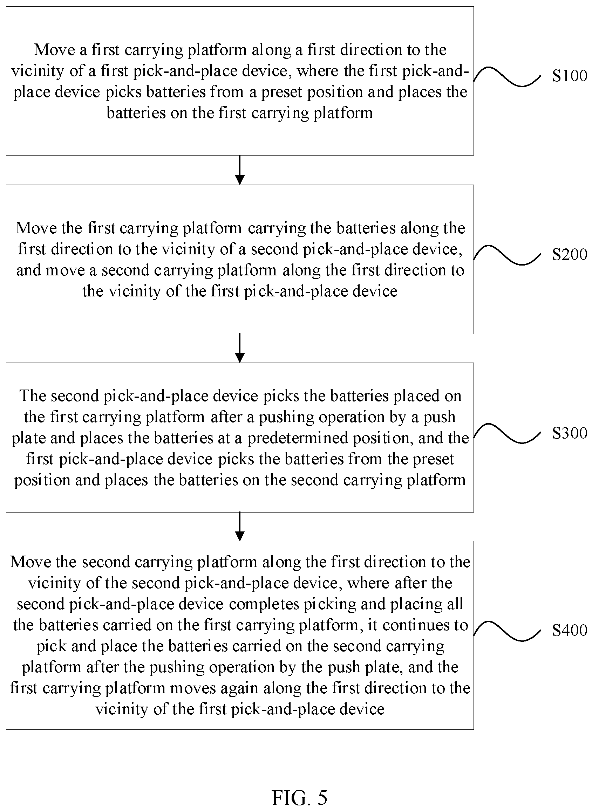

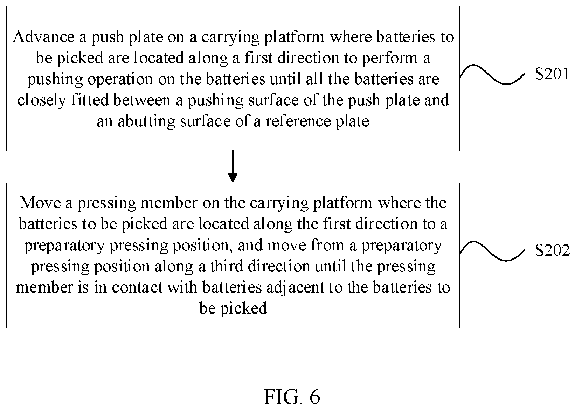

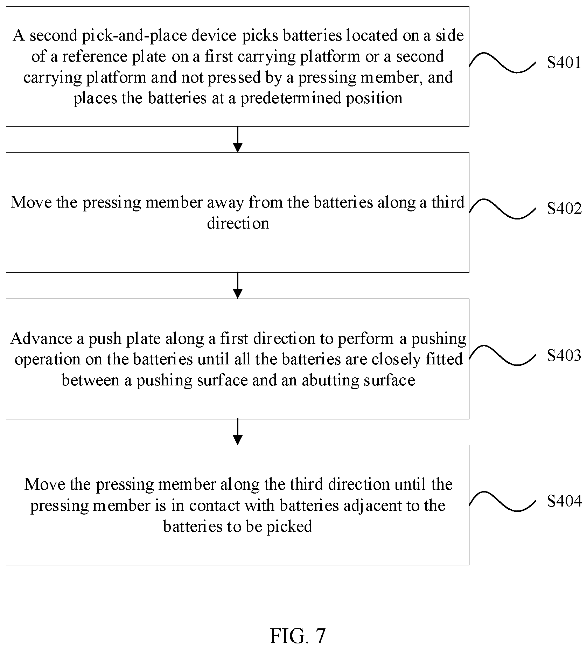

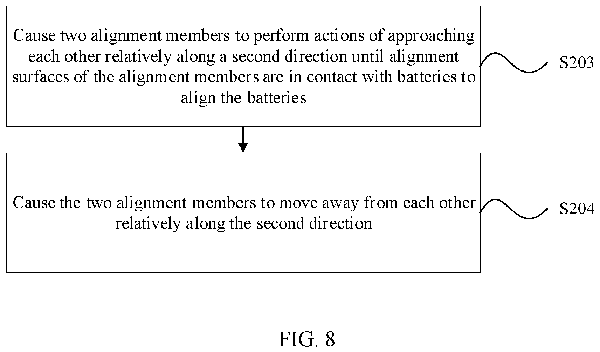

FIG. 1 is a schematic plan view of a structure of a battery conveying system according to some embodiments of the present disclosure. FIG. 2 is a schematic perspective view of a structure of a transfer table according to some embodiments of the present disclosure. FIG. 3 is a schematic plan view of a structure of a transfer table according to some embodiments of the present disclosure. FIG. 4 is a schematic partial enlarged view of a structure of a transfer table according to some embodiments of the present disclosure. FIG. 5 is a schematic flowchart of a battery conveying method according to some embodiments of the present disclosure. FIG. 6 is another schematic flowchart of a battery conveying method according to some embodiments of the present disclosure. FIG. 7 is yet another schematic flowchart of a battery conveying method according to some embodiments of the present disclosure. FIG. 8 is still another schematic flowchart of a battery conveying method according to some embodiments of the present disclosure.

In some embodiments of the present disclosure, for the convenience of description, a first direction, a second direction, and a third direction are set, and the first direction, the second direction, and the third direction are directions perpendicular to each other, but those skilled in the art should understand that the embodiments of the present disclosure are not limited to the case where the three directions are perpendicular to each other. For the convenience of description, as shown by the arrows in FIGS. 1 and 2, the direction where arrow X is located is the first direction, the direction where arrow Y is located is the second direction, and the direction where arrow Z is located is the third direction. Sometimes, the direction pointed by arrow Z along the third direction is also referred to as "upper", and the opposite direction is referred to as "lower".

As shown in FIG. 1, a first aspect of the present disclosure provides a battery conveying system 100. The battery conveying system 100 includes a transfer table 1, a first pick-and-place device 10, a second pick-and-place device 20, and push plates 3. The transfer table 1 includes at least two carrying platforms 2 for carrying batteries 30, and the at least two carrying platforms 2 each are capable of independently performing reciprocating motion along a first direction. The first pick-and-place device 10 is configured to pick batteries 30 and place the batteries 30 on at least any one of the carrying platforms 2. The second pick-and-place device 20 is configured to pick the batteries 30 carried on the carrying platforms 2 and place the batteries 30 at a prescribed position. The push plate 3 is configured to perform pushing operation on the batteries, the push plate 3 is provided on each of the carrying platforms 2 and is capable of advancing or retreating along the first direction, and the pushing operation is performed by the advancing action of the push plate 3. The first pick-and-place device 10 and the second pick-and-place device 20 are located on opposite sides of the transfer table 1 along the first direction.

In production and manufacturing processes such as for products like batteries, it is usually necessary to connect various conveying lines or stations through a battery conveying system to convey the batteries, so that the batteries can flow between the various conveying lines and stations for different processing operations. The battery conveying system 100 of the present disclosure is a system capable of connecting a loading table and a battery conveying line and conveying batteries between them.

In the embodiments of the present disclosure, the batteries may be battery cells.

A battery cell refers to a basic unit capable of achieving mutual conversion between chemical energy and electrical energy, which can be used to make battery modules or battery packs, thereby supplying power to electrical devices.

The battery cell may be a secondary battery, where the secondary battery refers to a battery cell that can continue to be used by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like, and the embodiments of the present disclosure are not limited thereto.

Although not shown, the battery cell generally includes an electrode assembly. The electrode assembly includes a positive electrode, a negative electrode, and a separator. During the charging and discharging process of the battery cell, active ions (for example, lithium ions) are intercalated and deintercalated back and forth between the positive electrode and the negative electrode. The separator is provided between the positive electrode and the negative electrode, which can prevent short circuit between the positive and negative electrodes while allowing active ions to pass through.

In some embodiments, the battery cell further includes an electrolyte, where the electrolyte conducts ions between the positive and negative electrodes. The present disclosure has no specific limitation on the type of electrolyte, which can be selected according to requirements. The electrolyte may be liquid, gel, or solid.

In some embodiments, the battery cell may include a housing. The housing is configured to encapsulate components such as the electrode assembly and the electrolyte. The housing may be a steel housing, an aluminum housing, a plastic housing (such as polypropylene), a composite metal housing (such as a copper-aluminum composite housing), an aluminum-plastic film, or the like.

As an example, the battery cell may be a cylindrical battery cell, a prismatic battery cell, a pouch battery cell, or a battery cell of other shapes. Prismatic battery cells include square-shell battery cells, blade-shaped battery cells, and polygonal prismatic batteries, such as hexagonal prismatic batteries, and the present disclosure has no particular limitation.

In some embodiments, the housing includes an end cover and a shell body, the shell body is provided with an opening, and the end cover closes the opening to form a sealed space for accommodating the electrode assembly, the electrolyte, and other substances. The shell body may be provided with one or more openings. One or more end covers may also be provided.

In some embodiments, at least one electrode terminal is provided on the housing, and the electrode terminal is electrically connected to a tab. The electrode terminal may be directly connected to the tab or indirectly connected to the tab through an adapter component. The electrode terminal may be provided on the end cover or on the shell body.

In some embodiments, a pressure relief mechanism is provided on the housing. The pressure relief mechanism is configured to release the internal pressure of the battery cell.

In the embodiments of the present disclosure, the battery may alternatively be a single physical module including one or more battery cells to provide higher voltage and capacity. When there are multiple battery cells, the multiple battery cells are connected in series, parallel, or series-parallel through a busbar.

Below, the battery conveying system 100 of the embodiments of the present disclosure is described with reference to the accompanying drawings. As shown in FIG. 1, the battery conveying system 100 includes a transfer table 1, a first pick-and-place device 10, and a second pick-and-place device 20.

The transfer table 1 is located between the first pick-and-place device 10 and the second pick-and-place device 20 for conveying or carrying batteries 30 to be loaded. The first pick-and-place device 10 and the second pick-and-place device 20 are located on opposite sides of the transfer table 1 along the first direction.

Exemplarily, the first pick-and-place device 10 and the second pick-and-place device 20 may be, for example, pick-and-place robots. In the embodiments of the present disclosure, the first pick-and-place device 10 is a six-axis robot, and the second pick-and-place device 20 is a four-axis robot.

Certainly, those skilled in the art should understand that in some other embodiments, the first pick-and-place device 10 and the second pick-and-place device 20 may alternatively be any other suitable devices as long as they can pick batteries.

As shown in FIG. 2, the transfer table 1 includes at least two carrying platforms 2 for carrying batteries 30. In the embodiments of the present disclosure, the number of carrying platforms 2 is two, and in some other embodiments, more carrying platforms 2 may alternatively be provided.

Herein, any one of the two carrying platforms 2 is taken as an example for description. The carrying platform 2 includes a carrying surface 21 and a carrying frame body 22, where the carrying frame body 22 is located below the carrying surface 21. The carrying surface 21 is generally in a flat plate shape, and the batteries 30 are placed on the carrying surface 21. The flat plate-shaped carrying surface 21 enables the placement of the batteries 30 to be more stable. The carrying frame body 22 is configured to support the carrying surface 21, and various functional parts can be provided on the carrying frame body 22 for performing pushing, alignment, and other operations (described in detail below) on the batteries 30 carried on the carrying surface 21.

The two carrying platforms 2 (the first carrying platform and the second carrying platform) of the embodiments of the present disclosure each are capable of independently performing reciprocating motion along the first direction, to be specific, can move from a side close to the first pick-and-place device 10 to a side close to the second pick-and-place device 20, and can also move from the side close to the second pick-and-place device 20 to the side close to the first pick-and-place device 10.

When starting to convey batteries 30, one of the carrying platforms 2 (the first carrying platform) can be moved along the first direction to the vicinity of the first pick-and-place device 10, so that the first pick-and-place device 10 picks batteries 30 at a predetermined position and places the batteries 30 on the carrying surface 21 of the carrying platform 2. In the embodiments of the present disclosure, the first pick-and-place device 10 can pick multiple batteries 30 at a time and place the multiple batteries 30 on the carrying platform 2 simultaneously. The embodiments of the present disclosure do not specifically limit the number of batteries 30 picked by the first pick-and-place device 10, which can be set according to actual conditions. The first pick-and-place device 10 can perform only one pick-and-place operation or multiple pick-and-place operations, and the first pick-and-place device 10 can stop picking and placing batteries to the carrying platform 2 until the number of batteries carried on the carrying platform 2 reaches the maximum (that is, when loading is completed). The embodiments of the present disclosure do not limit the maximum number of batteries that the carrying platform 2 can carry, which can be specifically set according to the actual size of the carrying platform 2.

After loading of one of the carrying platforms 2 is completed, this carrying platform 2 will move along the first direction to the vicinity of the second pick-and-place device 20, the second pick-and-place device 20 picks the batteries 30 on this carrying platform 2 and places the batteries 30 at a prescribed position, and at this time, another carrying platform 2 (the second carrying platform) will move along the first direction to the vicinity of the first pick-and-place device 10. While the second pick-and-place device 20 picks the batteries 30 for loading, the first pick-and-place device 10 performs loading on the another carrying platform 2. After loading of the another carrying platform 2 is completed, the another carrying platform 2 will similarly move along the first direction to the vicinity of the second pick-and-place device 20 to wait for loading. As a result, after the second pick-and-place device 20 picks the batteries 30 on one carrying platform 2, it can continue to pick the batteries 30 on the another carrying platform 2, while the empty carrying platform 2 after picking is completed will again move to the vicinity of the first pick-and-place device 10 to wait for the first pick-and-place device 10 to perform loading, and after loading is completed, it moves back to the vicinity of the second pick-and-place device 20 to wait for loading. In this way, after the second pick-and-place device 20 picks the batteries 30 on one carrying platform 2, it can continuously pick the batteries 30 on the another carrying platform 2 without interruption, achieving uninterrupted loading of batteries 30, thereby effectively improving the production line takt, reducing waiting time, accelerating conveying efficiency, increasing production capacity, and further improving production efficiency and reducing production costs.

In the embodiments of the present disclosure, along the conveying direction of the batteries, the first pick-and-place device 10 is located on the upstream side, and the second pick-and-place device 20 is located on the downstream side. The predetermined position is a loading table, and the prescribed position is a battery conveying line. Typically, the number of batteries 30 picked by the second pick-and-place devices 20 is less than the number of batteries 30 picked by the first pick-and-place devices 10. This is because multiple batteries 30 are usually stored at the loading table on the upstream side, and the first pick-and-place device 10 picking multiple batteries 30 at a time can achieve faster loading, while the battery conveying line on the downstream side will sequentially convey a prescribed number of batteries to various stations for corresponding processing operations. Therefore, the second pick-and-place device 20 needs to pick the entire row of multiple batteries on the carrying platform 2 in steps according to actual conditions, that is, only a prescribed number of batteries 30 are picked at a time. For example, if the next process needs to process individual batteries, the second pick-and-place device 20 can only pick one battery at a time.

In the related art, although battery stepwise picking can be achieved through a truss gripper that achieves the pick-and-place function, and the batteries can be transported to the downstream conveying line one by one, the truss gripper needs to reciprocate, which is time-consuming and has very low conveying efficiency.

The battery conveying system 100 of the embodiments of the present disclosure can achieve uninterrupted loading by the second pick-and-place device 20 through the alternate reciprocating motion of at least two carrying platforms 2, thereby effectively improving the production line takt and battery conveying efficiency.

In the embodiments of the present disclosure, the second pick-and-place device 20 can pick two batteries 30 at a time and place the two batteries 30 at the prescribed position. In some other embodiments, the second pick-and-place device 20 may also pick one battery 30 or more batteries 30 (more than two) at a time. The embodiments of the present disclosure do not specifically limit the number of batteries 30 picked by the second pick-and-place device 20, which can be set according to actual conditions.

In addition, those skilled in the art should understand that the predetermined position may also be, for example, a conveying line on the upstream side for transferring batteries 30 completed processing at other stations to the vicinity of the transfer table 1. The prescribed position may also be, for example, a tray on a tray conveying line on the downstream side for conveying the batteries 30 via the tray to subsequent stations for corresponding processing operations.

When the batteries 30 are picked by the first pick-and-place device 10 from the predetermined position and placed on the carrying platform 2, the distribution of the multiple batteries 30 along the first direction is relatively loose, in other words, there may be gaps between the batteries 30, so that the second pick-and-place device 20 may have the possibility of missing picking, that is, failing to pick the prescribed number of batteries 30. In addition, due to the limited picking stroke of the second pick-and-place device 20, the batteries 30 picked and placed on the carrying platform 2 by the first pick-and-place device 10 are not necessarily at the position to be picked (the position close to the second pick-and-place device 20) that the second pick-and-place device 20 can pick.

Therefore, the transfer table 1 of the embodiments of the present disclosure includes push plates 3, and the push plates 3 are provided on the side of the carrying platforms 2 close to the first pick-and-place device 10. The push plates 3 can perform pushing operations along the first direction on the batteries 30 on the carrying platforms 2, so that the gaps between the batteries 30 can be reduced or even eliminated. In addition, the batteries 30 on the carrying platforms 2 can also be pushed along the first direction to the position to be picked through the pushing operations of the push plates 3, facilitating subsequent picking by the second pick-and-place device 20. Moreover, the push plates 3 can also continue to perform pushing operations on the remaining batteries 30 after the second pick-and-place device 20 completes one picking operation, to push the remaining batteries 30 to the position to be picked, facilitating the second pick-and-place device 20 to perform the next picking operation, so that the second pick-and-place device 20 can continuously perform picking without adjusting its position. This is repeated for pushing and picking operations until the second pick-and-place device 20 picks all the batteries 30 on the carrying platform 2.

To be specific, the advancing direction of the push plates 3 may be a direction gradually away from the first pick-and-place device 10 along the first direction or a direction gradually close to the second pick-and-place device 20 along the first direction.

The shape of the push plates 3 may be a plate shape that is longer along the second direction, or may be a strip shape, a rod shape, or the like that is longer along the second direction, and there is no specific limitation on the shape of the push plates 3 as long as they can push the batteries 30. In addition, there is no specific limitation on the length of the push plates 3 along the second direction, as long as they can push all sizes of batteries 30 that the battery conveying system 100 can be compatible with.

In some embodiments of the present disclosure, the transfer table 1 includes a base bracket 11 and at least two guide rails 12, where the carrying platforms 2 are provided on the base bracket 11. The guide rails 12 are provided on the base bracket 11 and extend along the first direction, and the carrying platforms 2 are supported on the guide rails 12 and are capable of moving along the guide rails 12.

The guide rails 12 are usually grooves or ridges made of metal or other suitable materials, mainly used in occasions of linear reciprocating motion. The guide rails 12 can bear, fix, guide moving parts or devices, and reduce friction during their motion.

The carrying platforms 2 can achieve reciprocating motion along the first direction through cooperation with the guide rails 12, with a simple structure and clever design. In addition, the guide rails 12 can define the moving trajectory of the carrying platforms 2 while reducing the possibility of friction and shaking when the carrying platforms 2 move along the first direction, thereby making the movement of the carrying platforms 2 smoother and more stable, with higher reliability and lower energy consumption, which is more conducive to energy saving and environmental protection.

In addition, by driving the carrying platforms 2 to perform reciprocating motion along the guide rails 12, the size of the transfer table 1 can be easily designed as needed, thereby appropriately connecting the first pick-and-place device 10 and the second pick-and-place device 20 on both sides of the transfer table 1, so that the first pick-and-place device 10 and the second pick-and-place device 20 can easily pick and place batteries even when moving within a small range.

Specifically, as shown in FIG. 3, multiple sliding members 23 are provided below the carrying frame body 22 of the carrying platforms 2, and the sliding members 23 are connected to the carrying frame body 22, and are provided on the guide rails 12 and are capable of performing reciprocating motion in the first direction along the guide rails 12. The sliding members 23 include but are not limited to sliding plates, sliding blocks, sliding rods, or sliding assemblies composed of multiple structures.

In the embodiments of the present disclosure, the sliding members 23 are sliding blocks, and the sliding members 23 are capable of performing reciprocating motion along the guide rails 12 under the drive of a driving device, thereby driving the carrying platforms 2 to perform reciprocating motion along the first direction. The driving device includes but is not limited to a motor.

In the embodiments of the present disclosure, the guide rails 12 are ridge-shaped protruding structures, and the sliding members 23 are provided with grooves, and the sliding members 23 are capable of performing reciprocating motion along the guide rails 12 through the cooperation of the grooves with the ridge-shaped protruding structures of the guide rails 12.

In some other embodiments, the guide rails 12 may alternatively be in a groove shape, and the sliding members 23 are provided with protruding portions, and the sliding members 23 are capable of performing reciprocating motion along the guide rails 12 through the cooperation of the protruding portions with the grooves of the guide rails 12.

The embodiments of the present disclosure do not specifically limit the number of guide rails 12, as long as the minimum number of guide rails 12 is the same as the number of carrying platforms 2.

Exemplarily, the transfer table 1 may include only two guide rails 12, and the two carrying platforms 2 each perform reciprocating motion along one respective guide rail 12.

Exemplarily again, the transfer table 1 may include four guide rails 12, and the two carrying platforms 2 each perform reciprocating motion along two respective guide rails 12.

The embodiments of the present disclosure also do not specifically limit the number of sliding members 23, as long as the carrying platforms 2 can smoothly slide along the guide rails 12 through the sliding members 23.

In some embodiments of the present disclosure, stop members 13 are provided on opposite sides of the base bracket 11 along the first direction, and the stop members 13 are configured to stop the carrying platforms 2.

As a result, when the carrying platforms 2 perform reciprocating motion along the first direction, the stop members can limit the carrying platforms 2 to prevent the carrying platforms 2 from falling off the guide rails 12, and improve the reliability of the movement of the carrying platforms 2 along the first direction.

In the embodiments of the present disclosure, the number of stop members 13 is four, the four stop members 13 are arranged in pairs, and the two stop members in each pair of stop members 13 are respectively provided on opposite sides of one carrying platform 2 along the first direction for limiting one carrying platform 2.

The embodiments of the present disclosure do not specifically limit the number of stop members 13, as long as the carrying platforms 2 will not fall off the guide rails 12 during the reciprocating motion along the first direction.

In some embodiments of the present disclosure, the transfer table 1 includes a reference plate 4, where the reference plate 4 is provided on the carrying platforms 2 and on the opposite side of the push plates 3 along the first direction, and the reference plate 4 is configured to block the batteries 30.

The transfer table 1 further includes a reference plate 4, where the reference plate 4 is provided on a side of the carrying platforms 2 close to the second pick-and-place device 20, and always remains stationary along the first direction. The reference plate 4 can define the final pushed-in-place position of the batteries 30 to prevent the batteries 30 from falling off the carrying platforms 2 during the pushing operations of the push plates 3.

The reference plate 4 includes an abutting surface, the abutting surface is generally flat, and the flat abutting surface can distribute the force applied to the batteries 30 more evenly, improving the reliability and stability of the battery conveying system 100 during the pushing operations on the batteries 30. In some embodiments, the reference plate 4 may further be provided with a buffer layer on the abutting surface side, thereby avoiding the battery damage when the rigid reference plate 4 is in contact with the batteries 30. As for the length of the reference plate 4 along the second direction, it only needs to block all sizes of batteries 30 that the battery conveying system 100 can be compatible with, for example, it can be set to be the same or substantially the same as the length of the push plates 3 along the second direction.

When the push plates 3 perform pushing operations on the batteries 30, the push plates 3 approach the reference plate 4 along the first direction, thereby applying a pushing force along the first direction to the batteries 30, pushing the batteries 30 toward the position to be picked and making the multiple batteries 30 closely arranged along the first direction. As a result, the first pick-and-place device 10 and the second pick-and-place device 20 can easily pick and place batteries even when moving within a smaller range.

In the embodiments of the present disclosure, the number of push plates 3 and reference plates 4 is two, and one push plate 3 and one reference plate 4 are provided on each carrying platform 2. In some other embodiments, when the transfer table 1 includes more carrying platforms 2, the number of push plates 3 and reference plates 4 should also increase accordingly.

In some embodiments of the present disclosure, as shown in FIG. 4, the push plates 3 are capable of performing reciprocating motion along the first direction under the drive of push driving devices 31, the push driving devices 31 are located below the carrying surface 21 of the carrying platforms 2. The carrying platforms 2 are formed with avoidance openings 24 extending along the first direction, the push plates 3 pass through the avoidance openings 24 to connect to push plate connecting members 32, and the push plate connecting members 32 are connected to the push driving devices 31.

The push plates 3 may be directly or indirectly connected to the push driving devices 31. As a result, the push plates 3 are capable of moving along the first direction in an automated manner under the drive of the push driving devices 31, thereby easily achieving the pushing operations, with a simple structure and simple motion control.

In the embodiments of the present disclosure, the push plates 3 may be indirectly connected to the push driving devices 31 via push plate connecting members 32 and push plate brackets 33, where one end of the push plate bracket 33 is connected to the push plate 3, the other end thereof is connected to the push plate connecting member 32, and the push plate connecting member 32 is connected to the push driving device 31. In this way, by providing the push plate connecting members 32, a connection area between the push plate 3 and the push driving device 31 can be increased, increasing connection reliability, thereby making the movement of the push plates 3 more stable.

In addition, an elastic member 34 may be provided between the push plate bracket 33 and the push plate 3, so that the push plates 3 can provide a certain elastic buffer during the process of pushing the batteries 30, reducing the possibility of damage to the batteries 30. The elastic members 34 include but are not limited to compression springs.

Certainly, those skilled in the art should understand that in some other embodiments, the push plates 3 may alternatively be indirectly connected to the push driving devices 31via the push plate brackets 33, or the push plates 3 may be directly connected to the push driving devices 31.

The push driving devices 31 include but are not limited to motors. As a specific example, linear motors may be used, for example.

In the embodiments of the present disclosure, the push driving devices 31 are provided on the carrying frame bodies 22 and located below the carrying surface 21 of the carrying platforms 2. Therefore, they will not interfere with the batteries 30 placed on the carrying platforms 2, and also frees up a larger space for the carrying surface 21 of the carrying platforms 2, facilitating placement and picking of the batteries 30.

In some embodiments of the present disclosure, as shown in FIG. 4, the transfer table 1 includes lifting devices 35, where the lifting device 35 is connected to the push plate connecting member 32 and is provided between the push plate 3 and the push plate connecting member 32, and the push plates 3 are capable of performing reciprocating motion along a third direction under the drive of the lifting devices 35. The third direction is perpendicular to the first direction.

The model and size specifications of the batteries 30 conveyed by the battery conveying system 100 each time may be different. Therefore, the transfer table 1 further includes lifting devices 35, where the lifting devices 35 can be directly connected to the push plates 3 or indirectly connected to the push plates 3 via the push plate brackets 33. As a result, the push plates 3 can adjust the height of the push plates 3 along the third direction under the drive of the lifting devices 35, thereby enabling good pushing operations for batteries 30 of different height dimensions, with better compatibility and conducive to flexible production.

Exemplarily, the lifting devices 35 include but are not limited to jacking cylinders.

In some embodiments of the present disclosure, the transfer table 1 includes push detection sensors 36, where the push detection sensor 36 is provided on the push plate 3 for detecting whether the batteries 30 are pushed in place.

As a result, it is possible to detect whether the batteries 30 are pushed in place during the pushing operations of the push plates 3, and after the batteries 30 are pushed in place, the push plates 3 can be retracted or maintained in the current position, facilitating picking by the second pick-and-place device 20. In addition, the possibility of damage to the batteries 30 due to excessive pushing by the push plates 3 can be reduced.

Exemplarily, the push detection sensors 36 can, for example, calculate the overall size of the battery queue including multiple batteries 30 on the carrying platform 2 along the first direction based on the size of a single battery 30 along the first direction, and determine whether the push plates 3 are pushed in place based on the overall size and the spacing distance between the push plates 3 and the reference plates 4.

The push detection sensors 36 include but are not limited to diffuse reflection sensors, laser sensors, or grating ruler sensors.

Those skilled in the art should understand that in the embodiments of the present disclosure, the number of the above lifting devices 35 and the number of the above push detection sensors 36 are both two, and each carrying platform 2 of the two carrying platforms 2 is provided with one lifting device 35 and one push detection sensor 36. In some other embodiments, if the number of carrying platforms 2 is multiple, the number of lifting devices 35 and push detection sensors 36 will also increase accordingly.

In some embodiments of the present disclosure, as shown in FIG. 2, the transfer table 1 includes pressing members 5, where the pressing member 5 is configured to press the batteries 30 along the third direction, and the pressing member 5 is provided on the carrying platform 2 and is capable of performing reciprocating motion along the third direction under the drive of a pressing driving device 51.

Those skilled in the art should understand that in the embodiments of the present disclosure, the number of pressing members 5 is two, and each pressing member 5 presses the batteries 30 on one carrying platform 2. In some other embodiments, if the number of carrying platforms 2 is multiple, the number of pressing members 5 will also increase accordingly. The embodiments of the present disclosure take any one of the two pressing members 5 as an example for description.

Specifically, the pressing member 5 includes a pressing surface, and the pressing surface is used to be in contact with top surfaces of the batteries 30. The pressing surface is generally flat, thereby distributing the force applied to the batteries 30 more evenly during pressing. The pressing member 5 is connected to the pressing driving device 51 via a pressing bracket 52, and the elastic member may be provided between the pressing bracket 52 and the pressing member 5 for providing buffer during the pressing operations on the batteries 30, reducing the possibility of damage to the batteries 30. The elastic members include but are not limited to compression springs.

Since when the second pick-and-place device 20 picks the batteries 30 on the carrying platforms 2, the multiple batteries 30 have formed a battery queue closely arranged along the first direction under the pushing operations of the push plates 3, the second pick-and-place device 20 may have the possibility of mis-picking when picking the batteries 30, that is, not picking the prescribed number of batteries.

Therefore, the transfer table 1 of the embodiments of the present disclosure further includes pressing members 5, where the pressing members 5 can apply force (for example, downward thrust or pressure) to the batteries 30 along the third direction under the action of the pressing driving devices 51, thereby pressing the batteries adjacent to the batteries to be picked on the carrying platforms 2 along the third direction, so that the second pick-and-place device 20 can only pick the batteries 30 that are not pressed, reducing the possibility of accidentally picking extra batteries during the picking process of the batteries 30 by the second pick-and-place device 20, improving the reliability of picking by the second pick-and-place device 20, and also stably and reliably achieving the conversion of batteries 30 from a full row to a prescribed number for picking.

The pressing driving devices 51 include but are not limited to pressing cylinders.

In the embodiments of the present disclosure, pressing detection sensors 55 are further provided on the pressing members 5 for detecting whether the pressing surfaces of the pressing members 5 are in pressing contact with the top surfaces of the batteries 30. In this way, the reliability of the pressing members 5 can be further improved, and the possibility of the pressing members 5 not pressing the batteries 30 or causing damage to the batteries 30 due to excessive pressing can be reduced.

The pressing detection sensors 55 include but are not limited to diffuse reflection sensors.

In some embodiments of the present disclosure, the pressing member 5 is provided on the transfer table 1 via a moving carriage 53, and the moving carriage 53 is capable of performing reciprocating motion along the first direction on the transfer table 1 under the drive of a moving driving device 54.

As a result, the pressing member 5 is capable of moving along the first direction in an automated manner with a simple and stable structure. Moreover, since the pressing member 5 is capable of moving along the first direction with the moving carriage 53, batteries 30 at different positions can be pressed by adjusting the position of the pressing member 5 along the first direction, so that the second pick-and-place device 20 can accurately pick a prescribed number of batteries 30.

The moving driving devices 54 include but are not limited to linear motors.

Those skilled in the art should understand that after the pressing members 5 are driven by the moving carriages 53 to adjust the position along the first direction, as long as the prescribed number of batteries 30 that the second pick-and-place device 20 needs to pick does not change, the preparatory pressing position of the pressing members 5 along the first direction does not need to change. This is because after the second pick-and-place device 20 performs one pick-and-place operation, the push plates 3 will perform one pushing operation to push the subsequent batteries 30 to the position to be picked close to the second pick-and-place device 20. Therefore, after the push plates 3 complete pushing, the pressing members 5 can remain in the current position to continue the pressing operation.

Certainly, if the prescribed number of batteries 30 that the second pick-and-place device 20 needs to pick changes, the moving carriages 53 also need to move along the first direction accordingly, thereby driving the pressing members 5 to move along the first direction to a new preparatory pressing position.

In some embodiments of the present disclosure, as shown in FIG. 2, the transfer table 1 includes alignment assemblies 6, where the alignment assembly 6 is provided on the carrying platforms 2 and is configured to perform alignment operations on the batteries 30. The alignment assembly 6 includes two alignment members 61, where the two alignment members 61 extend along the first direction and are capable of approaching or moving away from each other along a second direction, and the alignment operations are performed through the approaching actions of the two alignment members 61. The second direction is perpendicular to both the first direction and the third direction.

Those skilled in the art should understand that in the embodiments of the present disclosure, the number of alignment assemblies 6 is two, and each alignment assembly 6 is provided on one carrying platform 2. In some other embodiments, if the number of carrying platforms 2 is multiple, the number of alignment assemblies 6 will also increase accordingly. The embodiments of the present disclosure take any one of the two alignment assemblies 6 as an example for description.

The batteries 30 picked and placed on the carrying platform 2 by the first pick-and-place device 10 are not necessarily neatly arranged, and their placement positions may not be consistent each time. This may lead to the possibility of incorrect picking by the second pick-and-place device 20 when the carrying platform 2 moves to the vicinity of the second pick-and-place device 20. Therefore, in the embodiments of the present disclosure, the transfer table 1 further includes alignment assemblies 6.

Specifically, the alignment assembly 6 includes a pair of alignment members 61, the two alignment members 61 are spaced along the second direction on opposite sides of the carrying platforms 2 in the initial position, and the two alignment members 61 are capable of approaching or moving away from each other along the second direction. After one of the carrying platforms 2 is loaded by the first pick-and-place device 10, the two alignment members 61 on the carrying platform 2 can approach each other along the second direction until they are in contact with the surfaces of the batteries 30 located between the two alignment members 61, and apply a certain pushing force to the surfaces of the batteries 30, prompting the center lines of the batteries 30 to align with the intermediate position between the two alignment members 61, thereby achieving the alignment operations on the batteries 30. As a result, multiple batteries 30 on the carrying platforms 2 can be aligned and centered with a simple structure and simple actions to form a neat battery queue, which is more conducive to picking by the second pick-and-place device 20. Moreover, since the alignment operations on the batteries 30 are achieved by aligning the center lines of the batteries 30 with the intermediate position between the two alignment members 61, no additional structural member as an alignment reference is required, which is beneficial to simplifying the device configuration.

The two alignment members 61 of the alignment assemblies 6 extend along the first direction and are generally in a long flat plate shape. Therefore, multiple batteries 30 on the carrying platforms 2 can be aligned at the same time, with higher alignment efficiency. In addition, since the transfer table 1 achieves centering and alignment through the mutual approach of the two alignment members 61, batteries 30 of different size specifications can be adapted to by adjusting the distance (or motion amplitude) when the two alignment members 61 approach each other, with good compatibility, which is conducive to flexible production.

In some embodiments of the present disclosure, as shown in FIGS. 2 and 3, the two alignment members 61 are connected to a lead screw 7, the lead screw 7 extends along the second direction and is rotatably provided below the carrying platforms 2, and the two alignment members 61 are capable of approaching or moving away from each other along the lead screw 7 with the rotation of the lead screw 7.

As a result, the mutual approaching motion of the two alignment members 61 can be achieved simply through the rotation of the lead screw 7, thereby easily achieving reliable alignment of batteries 30 with a simple structure and in an automated manner without additional alignment references. Moreover, locating the lead screw 7 below the carrying platforms 2 can also provide a larger operating space for the carrying platforms 2, which is more conducive to alignment operations on the batteries 30, and the lead screw transmission can also make the two alignment members 61 approach or move away from each other in a continuous motion manner, with smoother and more stable motion. In addition, the lead screw transmission has transmission efficiency and low energy consumption, which is more conducive to energy saving and environmental protection.

Specifically, the alignment assembly 6 includes at least two first alignment connecting members 62, one end of each of the two first alignment connecting members 62 is connected to each of the two alignment members 61, and the other end is connected to each of two second alignment connecting members 63. The second alignment connecting members 63 are both supported on the lead screw 7 and are capable of performing reciprocating motion along the second direction with the rotation of the lead screw 7.

Since the alignment members 61 are indirectly connected to the lead screw 7 via the first alignment connecting members 62 and the second alignment connecting members 63, it is not necessary to provide multiple lead screws and connect each alignment member 61 to one lead screw. The actions of the two alignment members 61 approaching or moving away from each other can be achieved with only one lead screw 7, which is beneficial to reducing the number of parts and lowering assembly difficulty. Moreover, the actions of the two alignment members 61 approaching or moving away from each other can be more synchronized, thereby better centering and aligning the batteries 30.

The lead screw 7 may be, for example, provided on the carrying frame body 22, and the lead screw 7 is provided with two engagement members 71 engaged with the lead screw 7, and the two second alignment connecting members 63 are fixedly connected to outer peripheral surfaces of the two engagement members 71 respectively. In the embodiments of the present disclosure, the engagement members 71 may be, for example, nuts engaged with the lead screw 7.

Exemplarily, the spiral directions of the internal threads of the two nuts are opposite, so that the two nuts can move in opposite directions along the second direction with the rotation of the lead screw 7, thereby driving the two alignment members 61 indirectly connected thereto to move in opposite directions along the second direction, achieving mutual approaching and moving away.

Exemplarily again, the spiral directions of the two nuts are the same, while the lead screw 7 is a bidirectional lead screw (that is, a lead screw with two kinds of threads in opposite directions), so that the two nuts can move in opposite directions along the second direction with the rotation of the lead screw 7, thereby driving the two alignment members 61 indirectly connected thereto to move in opposite directions along the second direction, achieving mutual approaching and moving away.

In the embodiments of the present disclosure, the first alignment connecting member 62 is generally in a side-inverted U shape, that is, having two cross beams extending along the second direction and a longitudinal beam extending along the third direction, where the longitudinal beam is located between the two cross beams, and the two cross beams are connected to the alignment member 61 and the second alignment connecting member 63 respectively. This shape of the first alignment connecting members 62 improves the support stability of the alignment members 61 while also enabling the alignment members 61 to have a larger displacement stroke in the second direction, so that the alignment members 61 can be compatible with more size specifications of batteries 30, with better compatibility performance.

Certainly, those skilled in the art should understand that the embodiments of the present disclosure do not specifically limit the shape of the first alignment connecting members 62, and the first alignment connecting members 62 may also be in any other suitable shapes.

As shown in FIGS. 2 and 3, since the alignment members 61 extend along the first direction and have a longer length, the alignment assembly 6 includes four first alignment connecting members 62, each alignment member 61 is separately connected to two first alignment connecting members 62, and the two first alignment connecting members 62 are spaced along the first direction. In this way, the alignment members 61 can be better supported, making the motion of the alignment members 61 more stable, ensuring consistent motion amplitude along the first direction, thereby better performing alignment operations on the batteries 30.

Certainly, those skilled in the art should understand that in some other embodiments, each alignment member 61 may also be connected to three, four, or more first alignment connecting members 62, which can be specifically set according to the actual size of the alignment members 61.

In the embodiments of the present disclosure, the second alignment connecting members 63 are generally in a flat plate shape extending along the first direction. In this way, when the alignment members 61 are connected to multiple first alignment connecting members 62, the opposite ends of the first alignment connecting members 62 connected to the alignment members 61 can all be connected to one second alignment connecting member 63, so that the multiple first alignment connecting members 62 can synchronously move along the second direction, thereby making the motion of the alignment members 61 along the second direction more stable and reliable.

In some embodiments of the present disclosure, as shown in FIG. 3, the transfer table 1 further includes a synchronous belt assembly 8. The synchronous belt assembly 8 includes two synchronous pulleys 81 and a synchronous belt 82 drivingly connected to the two synchronous pulleys 81, where one synchronous pulley 81 is connected to an output end of an alignment driving device 9, and the other synchronous pulley 81 is connected to the lead screw 7. The synchronous belt assembly 8 is capable of rotating under the drive of the alignment driving device 9, thereby driving the lead screw 7 to rotate.

As a result, the transmission structure using the synchronous belt 82 and synchronous pulleys 81 can make the alignment assemblies 6 approach or move away from both sides in the second direction simultaneously for centering, thereby achieving alignment of batteries, with higher motion accuracy and more stable motion process, while also reducing the risk of excessive force during alignment.

In the embodiments of the present disclosure, the alignment driving device 9 may be, for example, fixedly connected to the carrying frame body 22, and the alignment driving device 9 and the synchronous belt assembly 8 are both located below the carrying surface 21 of the carrying platforms 2. In this way, the zone below the carrying surface 21 can be fully utilized, improving space utilization, while avoiding interference with the batteries 30 on the carrying surface 21, and facilitating other parts or devices to perform picking, pushing, alignment, and other operations on the batteries 30.

In addition, by connecting the alignment driving device 9 and the lead screw 7 through the synchronous belt assembly 8, the alignment driving device 9 can be located above the lead screw 7 along the third direction, thereby preventing the alignment driving device 9 from exceeding the carrying platforms 2 along the second direction. In this way, space can be utilized more efficiently and interference can be reduced.

Those skilled in the art should understand that the transmission assembly between the alignment driving device 9 and the lead screw 7 is not limited to the synchronous belt assembly 8. In some other embodiments, any other suitable transmission assemblies such as belts and pulleys, gears and racks may also be used.

The alignment driving device 9 includes but is not limited to a motor. As a specific example, the alignment driving device 9 may be, for example, a servo motor.

In the embodiments of the present disclosure, as shown in FIG. 1, the outer periphery of the synchronous belt assembly 8 is sleeved with a cover body 83, which can provide a certain protection for the synchronous belt assembly 8, reducing the possibility of damage to the synchronous belt assembly 8, thereby improving the motion reliability of the alignment assemblies 6.

A second aspect of the present disclosure provides a battery conveying method using the battery conveying system 100 to convey batteries 30, where the battery conveying system 100 includes a transfer table 1, a first pick-and-place device 10, and a second pick-and-place device 20. The transfer table 1 includes at least a first carrying platform and a second carrying platform, the first carrying platform and the second carrying platform each are capable of independently performing reciprocating motion along a first direction. Push plates 3 are provided on the first carrying platform and the second carrying platform respectively, and the push plates 3 are capable of advancing or retreating along the first direction. As shown in FIG. 5, the battery conveying method includes:
S100: Move the first carrying platform along the first direction to the vicinity of the first pick-and-place device, where the first pick-and-place device picks batteries from a predetermined position and places the batteries on the first carrying platform.
S200: Move the first carrying platform carrying the batteries along the first direction to the vicinity of the second pick-and-place device, and move the second carrying platform along the first direction to the vicinity of the first pick-and-place device.
S300: The second pick-and-place device picks the batteries placed on the first carrying platform after the pushing operation by the push plates and places the batteries at a prescribed position, and the first pick-and-place device picks the batteries from the predetermined position and places the batteries on the second carrying platform;
S400: Move the second carrying platform along the first direction to the vicinity of the second pick-and-place device, where after the second pick-and-place device completes picking and placing all the batteries carried on the first carrying platform, it continues to pick and place the batteries carried on the second carrying platform after the pushing operation by the push plates, and the first carrying platform moves again along the first direction to the vicinity of the first pick-and-place device.

The predetermined position may be, for example, a loading table storing batteries 30, and the first pick-and-place device 10 can pick batteries 30 from the loading table and place them on the first carrying platform or the second carrying platform for loading operations.

The prescribed position may be, for example, a battery conveying line, and the second pick-and-place device 20 picks the batteries 30 carried on the first carrying platform or the second carrying platform and places the batteries 30 on the battery conveying line for loading operations.

Since the first carrying platform and the second carrying platform each are capable of independently performing reciprocating motion along the first direction, loading of batteries 30 and uninterrupted loading can be achieved through the alternating movement of the first carrying platform and the second carrying platform between the first pick-and-place device 10 and the second pick-and-place device 20, thereby effectively improving the production line takt, reducing waiting time, and improving conveying efficiency.

Those skilled in the art should understand that the first carrying platform and the second carrying platform are not necessarily alternating in motion. When the battery conveying system 100 just starts working, both the first carrying platform and the second carrying platform can move to the vicinity of the first pick-and-place device 10 to wait for the first pick-and-place device 10 to perform loading. The first pick-and-place device 10 can continue to perform loading on the second carrying platform without interruption after completing loading on the first carrying platform.

In addition, there may be a situation where the second pick-and-place device 20 has not completely picked all the batteries on the first carrying platform, but the first pick-and-place device 10 has already completed loading on the second carrying platform. In this case, the second carrying platform will also move along the first direction to the side of the second pick-and-place device 20 to wait for the second pick-and-place device 20 to continue picking the batteries on the second carrying platform after completing picking the batteries on the first carrying platform. This means that the first pick-and-place device 10 may have downtime waiting.

Regardless of whether the first pick-and-place device 10 works continuously without interruption or experiences intermittent downtime waiting, as long as the second pick-and-place device 20 can achieve uninterrupted loading, uninterrupted loading of the battery conveying system 100 can be ensured, thereby accelerating conveying efficiency, increasing production capacity, thereby improving production efficiency and reducing production costs.

In some embodiments of the present disclosure, the transfer table 1 includes reference plates 4 and pressing members 5 provided on the first carrying platform and the second carrying platform. The pressing members 5 are capable of moving along the first direction and are capable of moving along the third direction. The first direction is perpendicular to the third direction. As shown in FIG. 6, before the step of picking, by the second pick-and-place device, the batteries carried on the first carrying platform or the second carrying platform, the battery conveying method includes the following steps.
S201: Advance the push plate on the carrying platform where the batteries to be picked are located along the first direction to perform a pushing operation on the batteries until all the batteries are closely fitted between a pushing surface of the push plate and an abutting surface of the reference plate;
S202: Move the pressing member on the carrying platform where the batteries to be picked are located along the first direction to a preparatory pressing position, and moving from the preparatory pressing position along the third direction until the pressing member is in contact with the batteries adjacent to the batteries to be picked.

The position to be picked is, for example, the side of the carrying platform close to the second pick-and-place device 20.

As a result, before the second pick-and-place device 20 picks the batteries 30 on the first carrying platform or the second carrying platform, the batteries 30 can be closely arranged along the first direction through the pushing operation of the push plates 3, and the batteries 30 can be pushed to the position to be picked, facilitating picking by the second pick-and-place device 20, reducing the possibility of the second pick-and-place device 20 failing to pick batteries 30.

The preparatory pressing position is a position where the pressing member 5 is prepared to press down, for example, when the second pick-and-place device 20 picks two batteries 30 at a time, the preparatory pressing position is above the third battery counting from the reference plate 4 side along the first direction.

As a result, the contact of the pressing member 5 with the batteries adjacent to the batteries to be picked reduces the possibility of the second pick-and-place device 20 picking extra batteries, thereby improving the reliability of picking by the second pick-and-place device 20.

In some embodiments of the present disclosure, as shown in FIG. 7, the step of picking, by the second pick-and-place device, the batteries carried on the first carrying platform or the second carrying platform includes the following steps.

S401: The second pick-and-place device picks the batteries located on a side of the reference plate on the first carrying platform or the second carrying platform and not pressed by the pressing member, and places the batteries at the prescribed position.

S402: Move the pressing member away from the batteries along the third direction.

S403: Advance the push plate along the first direction to perform a pushing operation on the batteries until all the batteries are closely fitted between the pushing surface and the abutting surface.

S404: Move the pressing member along the third direction until the pressing member is in contact with the batteries adjacent to the batteries to be picked.

The above steps are repeated until the second pick-and-place device 20 completes picking and placing all the batteries 30 carried on the first carrying platform or the second carrying platform.

After the second pick-and-place device 20 completes one picking operation, the pressing member 5 releases the pressing, and the push plates 3 perform the pushing operation again to push the subsequent batteries to the position to be picked, and the pressing member 5 performs the pressing operation again, facilitating the second pick-and-place device 20 to continue the next picking operation. As a result, the conversion of batteries 30 from a full row to a prescribed number for picking can be achieved in an automated manner through simple actions.

In addition, after completing one pushing operation, the push plate 3 can continue to stay in the current position or perform a retreating operation.

In some embodiments of the present disclosure, the transfer table 1 includes alignment assemblies 6 provided on the first carrying platform and the second carrying platform. The alignment assembly 6 includes two alignment members 61, the two alignment members 61 are capable of approaching or moving away from each other along a second direction, and the second direction is perpendicular to both the first direction and the third direction. As shown in FIG. 8, before the step of picking, by the second pick-and-place device, the batteries carried on the first carrying platform or the second carrying platform, the battery conveying method further includes the following steps.

S203: Cause the two alignment members to perform actions of approaching each other along the second direction until the alignment surfaces of the alignment members are in contact with the batteries to align the batteries.

S204: Cause the two alignment members to move away from each other along the second direction.

As a result, a neatly aligned battery queue can be easily formed through the approaching actions of the two alignment members 61, which is more conducive to picking by the second pick-and-place device 20, while reducing the possibility of missed picking or incorrect picking by the second pick-and-place device 20 due to disordered arrangement of the batteries 30. Moreover, after completing one alignment operation, the two alignment members 61 move away from each other relatively, thereby facilitating the push plate 3 to perform the pushing operation, that is, the alignment operation is performed first, and then the pushing operation is performed.

Certainly, those skilled in the art should understand that the push plate 3 can also first move along the first direction toward the reference plate 4 to perform the pushing operation, and after completing one pushing operation, the push plate 3 then moves along the first direction away from the reference plate 4, thereby facilitating the alignment assemblies 6 to perform the alignment operation, that is, the pushing operation is performed first, and then the alignment operation is performed.

A third aspect of the present disclosure provides a battery production line, where the battery production line includes: a loading table, the battery conveying system 100 according to the first aspect of the present disclosure, and a battery conveying line. The first pick-and-place device 10 is configured to pick the batteries 30 at the loading table and place the batteries 30 on the transfer table 1. The second pick-and-place device 20 is configured to pick the batteries 30 carried on the transfer table 1 and place the batteries 30 on the battery conveying line.

As a result, conveying of batteries 30 can be achieved in an automated manner, and through the mutual cooperation in action timings of at least two carrying platforms 2 of the transfer table 1, the production takt is improved, thereby improving conveying efficiency and increasing production capacity.

Exemplarily, the battery conveying line may be a conveyor belt, for example, a belt-like object such as a belt, multiple roller shafts arranged in parallel, or multiple chains.

The second pick-and-place device 20 can, for example, place the batteries 30 directly on the battery conveying line or place the batteries 30 on trays on the battery conveying line.

In some embodiments, the battery production line can produce battery modules and battery packs including multiple batteries (or multiple battery cells).

Below, specific examples of some embodiments of the present disclosure are described with reference to the drawings.

As a specific example, the battery conveying system 100 includes a transfer table 1 with two stations (carrying platforms 2), a large package gripper (first pick-and-place device 10), and a four-axis transfer fixture (second pick-and-place device 20).

The transfer table 1 includes a chassis transverse movement module, a side clamping module, a large surface pressing module, and a top pressing module. The chassis transverse movement module includes transverse guide rails (guide rails 12) extending along the first direction and limiting members (stop members 13). The two stations can each perform reciprocating motion along the transverse guide rails under the drive of linear modules (driving devices), and the limiting members can limit the two stations to a certain extent to prevent the stations from falling during movement along the transverse guide rails. The side clamping module includes two side clamping blocks (alignment members 61), a power source servo motor (alignment driving device 9), a connection lead screw (lead screw 7), and connection plates (first alignment connecting members 62 and second alignment connecting members 63). The side clamping blocks are connected to the connection plates, the connection plates are supported on the connection lead screw, and the connection lead screw is capable of rotating under the drive of the power source servo motor, thereby driving the side clamping blocks to clamp the sides of the batteries 30. The large surface pressing module includes a large surface pressing block (push plate 3), a large surface fixed block (reference plate 4), and a servo motor (push driving device 31). The large surface pressing block is capable of performing reciprocating motion along the first direction under the drive of the servo motor, so as to perform pushing operations on the batteries. The top pressing module includes a top pressing block (pressing member 5), a linear module (moving driving device 54), a vertical movement cylinder (pressing driving device 51), and a diffuse reflection sensor (pressing detection sensor 55). The top pressing module is capable of moving along the first direction under the drive of the linear module and is capable of pressing the batteries 30 under the drive of the vertical movement cylinder.

The specific actions of the battery conveying system 100 are as follows.

One station in the transfer table is driven by the linear module to the loading position (loading table), and the large package gripper places the entire row of batteries 30 at equal intervals on the transfer table. The transmission structure (synchronous belt assembly 8) drives the side clamping blocks to center and clamp the batteries 30 under the drive of the power source servo motor. The large surface pressing block presses the equal-interval batteries 30 in the large surface direction under the drive of the servo motor, and the large surface fixed block limits the batteries 30. The top pressing block moves in the large surface direction to the position of the third battery under the drive of the linear module and presses down the top of batteries under the drive of the vertical movement cylinder. Then, the station is driven by the linear module to the conveying line (battery conveying line), and another station is driven by the linear module to the loading position. The first two batteries on the station at the conveying line are clamped and placed on the tray of the conveying line by the four-axis transfer fixture (second pick-and-place device 20). Since the four-axis transfer fixture removes two batteries, the vertical movement cylinder drives the top pressing block back to the initial position, and the large surface pressing block continues to move forward to push the original third and fourth batteries to the large surface fixed block for the four-axis transfer fixture to perform the next picking. This cycle continues until the four-axis transfer fixture picks all the batteries on the station. At this time, the another station has completed loading via the large package gripper (first pick-and-place device 10) and has been driven by the linear module to the vicinity of the conveying line, and has completed the above steps of side clamping, large surface clamping, and top pressing. Therefore, the four-axis transfer fixture can continuously pick the batteries on the another station without interruption, while the empty station after picking is completed is driven by the linear module to move back to the loading position again to wait for the large package gripper to perform loading operations.

Through the cooperation of the above timings of the two stations of the transfer table 1, the takt of the entire battery conveying system can be improved, so that the four-axis transfer fixture can perform loading without interruption, thereby improving conveying efficiency, and also achieving the conversion of batteries from a full row to individual (prescribed number).

The above embodiments are only used to illustrate the technical solutions of the present disclosure and are not limiting; although the present disclosure has been described in detail with reference to the foregoing embodiments, those of ordinary skill in the art should understand that they can still modify the technical solutions recorded in the foregoing embodiments or equivalently replace some or all of the technical features; and these modifications or replacements do not make the essence of the corresponding technical solutions depart from the scope of the technical solutions of the embodiments of the present disclosure, which should be covered within the scope of the present disclosure. In particular, as long as there is no structural conflict, the various technical features mentioned in the various embodiments can be combined in any manner.

### Industrial applicability

The battery conveying system, battery conveying method, and battery production line according to the present disclosure can effectively improve the battery production line takt, reduce waiting time, accelerate the conveying efficiency of batteries, thereby helping to improve the production efficiency of battery packs.

## Claims

1. A battery conveying system, wherein the battery conveying system comprises:
a transfer table, comprising at least two carrying platforms for carrying batteries, wherein the at least two carrying platforms each are capable of independently performing reciprocating motion along a first direction;
a first pick-and-place device configured to pick batteries and place the batteries on at least any one of the carrying platforms;
a second pick-and-place device configured to pick batteries carried on the carrying platforms and place the batteries at a prescribed position; and
push plates configured to perform pushing operation on the batteries, wherein the push plate is provided on the carrying platform and is capable of advancing or retreating along the first direction, and the pushing operation is performed by the advancing action of the push plate;
wherein the first pick-and-place device and the second pick-and-place device are located on opposite sides of the transfer table along the first direction.

2. The battery conveying system according to claim 1, wherein the transfer table comprises:
a base bracket, wherein the carrying platforms are provided on the base bracket; and
at least two guide rails, wherein the guide rails each are provided on the base bracket and extend along the first direction, and the carrying platforms are respectively supported on the guide rails and are capable of moving along the guide rails.

3. The battery conveying system according to claim 2, wherein
stop members are provided on opposite sides of the base bracket along the first direction, and the stop members are configured to stop the carrying platforms.

4. The battery conveying system according to any one of claims 1 to 3, wherein the transfer table comprises:
reference plates provided on the carrying platforms and on opposite side of the push plates along the first direction, wherein the reference plate is configured to stop the batteries.

5. The battery conveying system according to any one of claims 1 to 4, wherein
the push plate is capable of performing reciprocating motion along the first direction under the drive of a push driving device, wherein the push driving device is located below a carrying surface of the carrying platform; the carrying platform is formed with an avoidance opening extending along the first direction, the push plate passes through the avoidance opening to connect to a push plate connecting member, and the push plate connecting member is connected to the push driving device.

6. The battery conveying system according to claim 5, wherein
the transfer table comprises lifting devices, wherein the lifting device is connected to the push plate connecting member and is provided between the push plate and the push plate connecting member, and the push plates are capable of performing reciprocating motion along a third direction under the drive of the lifting devices;
wherein the third direction is perpendicular to the first direction.

7. The battery conveying system according to any one of claims 1 to 6, wherein
the transfer table comprises push detection sensors, wherein the push detection sensor is provided on the push plate and is configured to detect whether the batteries are pushed in place.

8. The battery conveying system according to any one of claims 1 to 7, wherein the transfer table comprises:
pressing members configured to press the batteries along a third direction, wherein the pressing member is provided on the carrying platform and is capable of performing reciprocating motion along the third direction under the drive of a pressing driving device.

9. The battery conveying system according to claim 8, wherein
the pressing member is provided on the transfer table via a moving carriage, and the moving carriage is capable of performing reciprocating motion along the first direction on the transfer table under the drive of a moving driving device.

10. The battery conveying system according to any one of claims 1 to 9, wherein the transfer table comprises alignment assemblies provided on the carrying platforms and configured to perform alignment operations on the batteries; and
the alignment assembly comprises two alignment members, wherein the two alignment members extend along the first direction and are capable of approaching or moving away from each other along a second direction, and the alignment operations are performed through the approaching actions of the two alignment members;
wherein the second direction is perpendicular to both the first direction and the third direction.

11. The battery conveying system according to claim 10, wherein
the two alignment members are connected to a lead screw, wherein the lead screw extends along the second direction and is rotatably provided below the carrying platforms, and the two alignment members are capable of approaching or moving away from each other along the lead screw with the rotation of the lead screw.

12. The battery conveying system according to claim 11, wherein
the alignment assembly comprises at least two first alignment connecting members, wherein one end of each of the two first alignment connecting members is connected to each of the two alignment members, and the other end is connected to each of two second alignment connecting members; and
the two second alignment connecting members are both supported on the lead screw and are capable of performing reciprocating motion along the second direction with the rotation of the lead screw.

13. The battery conveying system according to claim 11 or 12, wherein the transfer table further comprises a synchronous belt assembly; wherein
the synchronous belt assembly comprises two synchronous pulleys and a synchronous belt drivingly connected to the two synchronous pulleys, wherein one of the synchronous pulleys is connected to an output end of an alignment driving device, and the other synchronous pulley is connected to the lead screw; and
the synchronous belt assembly is capable of rotating under the drive of the alignment driving device, thereby driving the lead screw to rotate.

14. A battery conveying method using a battery conveying system to convey batteries, wherein the battery conveying system comprises a transfer table, a first pick-and-place device, and a second pick-and-place device; the transfer table comprises at least a first carrying platform and a second carrying platform, the first carrying platform and the second carrying platform each are capable of independently performing reciprocating motion along a first direction; push plates are provided on the first carrying platform and the second carrying platform respectively, and the push plates is capable of advancing or retreating along the first direction; and
the battery conveying method comprises:
moving the first carrying platform along the first direction to the vicinity of the first pick-and-place device, wherein the first pick-and-place device picks the batteries from a predetermined position and places the batteries on the first carrying platform;
moving the first carrying platform carrying the batteries along the first direction to the vicinity of the second pick-and-place device, and moving the second carrying platform along the first direction to the vicinity of the first pick-and-place device;
picking, by the second pick-and-place device, the batteries placed on the first carrying platform after the pushing operation by the push plates and placing the batteries at a prescribed position, and picking, by the first pick-and-place device, the batteries from the predetermined position and placing the batteries on the second carrying platform; and
moving the second carrying platform along the first direction to the vicinity of the second pick-and-place device, wherein after the second pick-and-place device completes picking and placing all the batteries carried on the first carrying platform, it continues to pick and place the batteries carried on the second carrying platform after the pushing operation by the push plates, and the first carrying platform moves again along the first direction to the vicinity of the first pick-and-place device.

15. The battery conveying method according to claim 14, wherein the transfer table comprises reference plates and pressing members provided on the first carrying platform and the second carrying platform; the pressing members being capable of moving along the first direction and being capable of moving along a third direction; and the first direction being perpendicular to the third direction; and
before the step of picking, by the second pick-and-place device, the batteries carried on the first carrying platform or the second carrying platform, the battery conveying method comprises:
advancing the push plate on the carrying platform where the batteries to be picked are located along the first direction to perform a pushing operation on the batteries until all the batteries are closely fitted between a pushing surface of the push plate and an abutting surface of the reference plate; and
moving the pressing member on the carrying platform where the batteries to be picked are located along the first direction to a preparatory pressing position, and moving from the preparatory pressing position along the third direction until the pressing member is in contact with the batteries adjacent to the batteries to be picked.

16. The battery conveying method according to claim 15, wherein
the step of picking, by the second pick-and-place device, the batteries carried on the first carrying platform or the second carrying platform comprises:
picking, by the second pick-and-place device, the batteries located on a side of the reference plate on the first carrying platform or the second carrying platform and not pressed by the pressing member, and placing the batteries at the prescribed position;
moving the pressing member away from the batteries along the third direction;
advancing the push plate along the first direction to perform a pushing operation on the batteries until all the batteries are closely fitted between the pushing surface and the abutting surface;
moving the pressing member along the third direction until the pressing member is in contact with the batteries adjacent to the batteries to be picked; and
repeating the above steps until the second pick-and-place device completes picking and placing all the batteries carried on the first carrying platform or the second carrying platform.

17. The battery conveying method according to any one of claims 14 to 16, wherein the transfer table comprises alignment assemblies provided on the first carrying platform and the second carrying platform; wherein the alignment assembly comprises two alignment members, the two alignment members are capable of approaching or moving away from each other along a second direction, and the second direction is perpendicular to both the first direction and the third direction; and
before the step of picking, by the second pick-and-place device, the batteries carried on the first carrying platform or the second carrying platform, the battery conveying method further comprises:
causing the two alignment members to perform actions of approaching each other along the second direction until the alignment surfaces of the alignment members are in contact with the batteries to align the batteries; and
causing the two alignment members to move away from each other along the second direction.

18. A battery production line, wherein the battery production line comprises: a loading table, the battery conveying system according to any one of claims 1 to 13, and a battery conveying line; wherein
the first pick-and-place device is configured to pick the batteries at the loading table and place the batteries on the transfer table; and
the second pick-and-place device is configured to pick the batteries carried on the transfer table and place the batteries on the battery conveying line.
